# EUROPÄISCHE PATENTANMELDUNG

(11) **EP 1 452 455 A1**
(43) Veröffentlichungstag der Anmeldung: **01.09.2004**
(21) Anmeldenummer: 03004042.2
(22) Anmeldetag: 25.02.2003
(51) Int. Cl.: B65D 8/04, B65D 21/02, B65D 23/10

(54) **Kunststoffflasche, insbesondere Getränkeflasche**

(71) Anmelder: Baumann, Michael, 71636 Ludwigsburg (DE)
(72) Erfinder: Baumann, Michael, 71636 Ludwigsburg (DE)
(74) Vertreter: Vetter, Hans, Dipl.-Phys. Dr.

(57) **Zusammenfassung**

Es wird eine Kunststoffflasche, insbesondere eine Getränkeflasche, mit einem Flaschenkörper (10) vorgeschlagen, der an einem Ende einen Boden (11) und am anderen Ende eine verschließbare Ausgießöffnung (13) besitzt. Der Flaschenkörper (10) besteht aus zwei separaten Teilen (16, 17), die mit lösbaren Verbindungsmitteln (14, 15) zur dichtenden Verbindung miteinander versehen sind, wobei wenigstens eines der Teile (16, 17) einen sich zur Verbindungsstelle hin vergrößernden Durchmesser besitzt. Hierdurch ist ein platzsparender Transport der voneinander gelösten Teile (16, 17) möglich, wobei diese zum Wiederauffüllen durch die Verbindungsmittel (14, 15) wieder miteinander dichtend verbunden werden können.

## Beschreibung

Die Erfindung betrifft eine Kunststoffflasche, insbesondere eine Getränkeflasche, mit einem Flaschenkörper, der an einem Ende einen Boden und am anderen Ende eine verschließbare Ausgießöffnung besitzt.

Bei einer derartigen, beispielsweise aus der EP 0842859 B1 oder der EP 1038785 A2 bekannten Kunststoffflasche wird der einteilige Flaschenkörper nach dem Entleeren seines Inhalts mit einem Messer oder dergleichen in zwei Teile zerschnitten, die dann mit entsprechenden Teilen anderer Flaschen ineinandergeschoben bzw. ineinandergestapelt werden können, um bei der Entsorgung ein möglichst geringes Volumen zu erreichen.

Der Nachteil der bekannten Kunststoffflaschen besteht darin, dass sie reine Einwegflaschen sind, das heißt, nach dem Auftrennen in zwei Teile können sie nicht wiederverwendet werden, sondern sie müssen entsorgt werden. Weiterhin besteht der Nachteil, dass sie vom Herstellungsort zur Abfüllstelle nicht ineinandergestapelt transportiert werden können. Schließlich benötigt man zum Auftrennen ein spezielles Auftrennwerkzeug, da das Auftrennen beispielsweise mittels eines Messers im Hinblick auf das zähe Kunststoffmaterial eine hohe Verletzungsgefahr bedeuten würde.

Eine Aufgabe der vorliegenden Erfindung besteht darin, eine auch als Mehrwegflasche geeignete Kunststoffflasche zu schaffen, die sich zum Ineinanderstapeln eignet und die nach einem ersten Auftrennen ohne Hilfsmittel wieder zusammengesetzt und wieder geteilt werden kann.

Diese Aufgabe wird erfindungsgemäß dadurch gelöst, dass der Flaschenkörper aus zwei separaten Teilen besteht, die mit lösbaren Verbindungsmitteln zur dichtenden Verbindung miteinander versehen sind, wobei wenigstens eines der Teile einen sich zur Verbindungsstelle hin vergrößernden Durchmesser besitzt. Die Aufgabe wird auch dadurch gelöst, dass der einstückige Flaschenkörper zwei axial benachbarte, an seinem Umfang angeordnete Verbindungsmittel besitzt, die nach dem Auftrennen des Flaschenkörpers entlang einer zwischen den Verbindungsmitteln verlaufenden Trennlinie in zwei Teile dichtend miteinander verbindbar sind.

Die Vorteile der erfindungsgemäßen Kunststoffflasche bestehen insbesondere darin, dass durch die lösbaren Verbindungsmittel eine Mehrwegflasche geschaffen wurde, die auf einfache Weise ohne Hilfsmittel in zwei Teile zerlegbar und als solche ineinanderstapelbar ist und die ebenfalls ohne Hilfsmittel wieder zu einer dichten Flasche zusammengesetzt werden kann. Die Stapelbarkeit eines der Teile oder beider Teile wird dadurch erreicht, dass wenigstens eines dieser Teile einen sich zur Verbindungsstelle hin vergrößernden Durchmesser besitzt, das heißt, der Flaschenkörper vergrößert sich leicht konisch zu den Verbindungsmitteln hin. Ein weiterer Vorteil besteht darin, dass sich die durch Lösen der Verbindungsmittel erreichten einzelnen Flaschenteile sehr leicht reinigen lassen, im Gegensatz zu herkömmlichen Flaschen, wo dies durch den engen Flaschenhals hindurch erfolgen muss. Zur Herstellung der Kunststoffflasche kann in einfacher Weise in einem herkömmlichen Kunststoffverarbeitungsverfahren ein einstückiger Flaschenkörper gebildet werden, der an seinem Umfang angeordnete Verbindungsmittel besitzt. Direkt nach dem Herstellen oder später wird dieser Flaschenkörper entlang einer zwischen den Verbindungsmitteln verlaufenden Trennlinie in zwei Teile geteilt, die dann mit Hilfe der Verbindungsmittel wieder dichtend miteinander verbindbar sind. Auf diese Weise können die Flaschenteile bereits für den Transport vom Herstellungsort zur Abfüllstelle ineinandergestapelt werden. Dann werden sie mittels der Verbindungsmittel dichtend zusammengesetzt und mit einem flüssigen Inhalt versehen, beispielsweise mit einem Getränk. Nach dem bestimmungsgemäßen Entleeren des Inhalts können sie wieder zerlegt und ineinandergestapelt werden, um mit möglichst geringem Volumen zur Abfüllstelle oder schließlich zur Entsorgungsstelle transportiert werden zu können.

Durch die in den Unteransprüchen aufgeführten Maßnahmen sind vorteilhafte Weiterbildungen und Verbesserungen der in den Ansprüchen 1 und 3 angegebenen Kunststoffflasche möglich.

Die Verbindungsmittel sind zweckmäßigerweise einstückig an den beiden Teilen des Flaschenkörpers angeformt und können in einem Arbeitsgang hergestellt werden. Sie können vorzugsweise als Schnapp-, Schraub-, Bajonett- oder Rastverbindungsmittel ausgebildet sein.

Als beste Ausführung als Schraubverbindungsmittel haben sich ineinander verschraubbare Gewinde an den beiden Teilen des Flaschenkörpers erwiesen. Als günstig hat es sich erwiesen, wenn dann der Flaschenkörper eine ein rutschfestes Greifen gestattende Außenstruktur besitzt, insbesondere eine Riffelung, um das dichtende Verschrauben und Lösen der Verschraubung leicht durchführen zu können.

Der axiale Abstand zwischen den Verbindungsmitteln und dem Boden ist in einer bevorzugten Ausführungsform wesentlich geringer als der axiale Abstand zwischen den Verbindungsmitteln und der Ausgießöffnung. Dies bedeutet beispielsweise bei einer Ausführung mit verschraubbaren Gewinden als Schraubverbindungsmittel, dass sich ein Bodenteil der Kunststoffflasche abschrauben und anschrauben lässt.

Wenigstens eines der beiden Teile des Flaschenkörpers ist bevorzugt mit entsprechenden gleichen Teilen ineinanderstapelbar ausgebildet.

Als bevorzugte Herstellungsmethode für den Flaschenkörper hat sich das Streckblasverfahren erwiesen.

Ein Ausführungsbeispiel der Erfindung ist in der Zeichnung dargestellt und in der nachfolgenden Beschreibung näher erläutert. Es zeigen:
- Fig. 1: eine Kunststoffflasche gemäß einem Ausführungsbeispiel der Erfindung vor dem Auftrennen in zwei Teile entlang einer zwischen den Gewinden verlaufenden Trennlinie und
- Fig. 2: dieselbe Kunststoffflasche nach dem Auftrennen in zwei Teile.

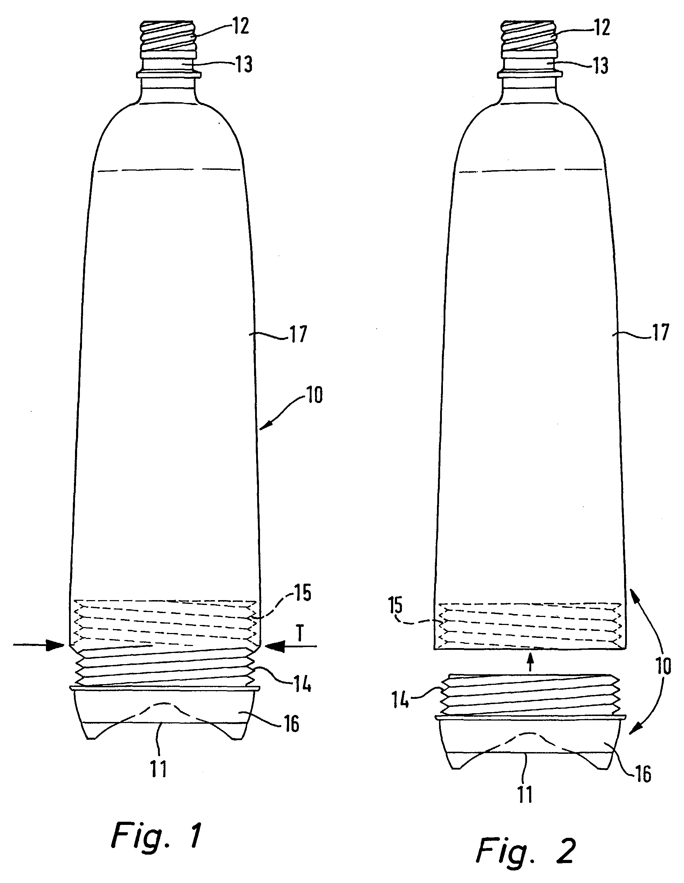

Die in den Fig. 1 und 2 dargestellte Kunststoffflasche wird zunächst einstückig hergestellt, wobei sich hierfür das Streckblasverfahren am besten eignet. Andere mögliche Herstellungsverfahren wären das Extrusionsblasverfahren und das Spritzgussverfahren. Als Material eignen sich beispielsweise Kunststoffe, wie PET oder PC oder PP.

Diese einstückig hergestellte Kunststoffflasche besitzt einen Flaschenkörper 10, der an einem Ende einen Boden 11 und am anderen Ende eine durch eine Verschlusskappe 12 verschließbare Ausgießöffnung 13 besitzt. Anstelle einer als Schraubkappe ausgebildeten Verschlusskappe können auch andere bekannte Flaschenverschlüsse treten. Diese Kunststoffflasche ist insbesondere als Getränkeflasche vorgesehen, jedoch kann sie auch zur Aufnahme anderer Flüssigkeiten oder fließfähiger Materialien dienen.

Im bodennahen Bereich ist der Flaschenkörper 10 mit zwei in axialer Richtung nebeneinander angeordneten Schraubgewinden 14, 15 versehen, die jeweils den Flaschenkörper 10 umgreifen. Das dem Boden 11 nähere Schraubgewinde 14 ist als Außengewinde und das daneben angeordnete Schraubgewinde 15 als Innengewinde ausgebildet, wobei diese Schraubgewinde 14, 15 so dimensioniert sind, dass das als Innengewinde ausgebildete Schraubgewinde 15 zur Aufnahme des als Außengewinde ausgebildeten Schraubgewindes 14 dienen kann. Diese Schraubgewinde 14, 15 werden durch entsprechende Formgebung der Blasform bei der Herstellung automatisch gebildet, das heißt, sie sind einstückig am Flaschenkörper 10 integriert. Selbstverständlich kann die Anordnung von Innengewinde und Außengewinde auch umgekehrt sein.

Nach der Herstellung erfolgt eine Auftrennung des Flaschenkörpers 10 in zwei Teile 16, 17. Die Auftrennung erfolgt entlang einer Trennlinie T, die sich zwischen den Schraubgewinden 14, 15 über den Umfang des Flaschenkörpers 10 erstreckt. In Fig. 2 sind die beiden nach dem Auftrennen gebildeten separaten Teile 16, 17 dargestellt.

Sofern die Produktionsstätte der Kunststoffflaschen und eine Getränkeabfüllstation oder eine Abfüllstation für sonstige Flüssigkeiten in unmittelbarer Nähe zueinander angeordnet sind, wird nun das untere Teil 16 in das obere Teil 17 dichtend eingeschraubt. Die Schraubgewinde 14, 15 sind so ausgebildet, dass durch Labyrintheffekte die erforderliche Dichtigkeit entsteht. Zusätzlich kann noch eine oder können mehrere Dichtlippen zur zusätzlichen Abdichtung angeformt sein. Bei Erfordernis kann auch einer oder können mehrere separate Dichtringe eingesetzt werden. Nach dem dichtenden Einschrauben des unteren Teils 16 in das obere Teil 17 kann die Abfüllung der Kunststoffflasche mit dem flüssigen Inhalt erfolgen. Danach erfolgt die Auslieferung an den Verbraucher.

Ist die Kunststoffflasche geleert, so kann nun das untere Teil 16 aus dem oberen Teil 17 herausgeschraubt werden. Zur Erleichterung des Herausschraubens durch den Verbraucher dient beispielsweise eine nicht dargestellte Riffelung an der Außenfläche des Flaschenkörpers 10, wobei auch andere rutschfeste Außenstrukturen dienen können. Die beiden Teile 16, 17 sind leicht konisch ausgebildet, das heißt, ihr Durchmesser verringert sich allmählich, ausgehend von den Schraubgewinden 14, 15 bis hin zu den Endbereichen. Hierdurch können bei einer Vielzahl von Kunststoffflaschen jeweils die oberen Teile 17 und auch die unteren Teile 16 ineinandergesteckt bzw. ineinandergestapelt werden. Dies gestattet eine volumensparende Aufbewahrung und einen volumensparenden Transport zurück zur Verkaufsstelle als Pfandflasche und von dort zurück zur Abfüllstation. In der Abfüllstation können die noch getrennten Teile leicht durch die großen Öffnungen im Bereich der Schraubgewinde 14, 15 gereinigt und dann wieder zusammengeschraubt werden, um erneut gefüllt zu werden.

Ist der Produktionsstandort der Kunststoffflaschen von der Abfüllstation räumlich weiter entfernt, so können die neu hergestellten Kunststoffflaschen schon zum Transport zur Abfüllstation separat ineinandergestapelt transportiert werden, um den Vorteil des volumensparenden Transports auszunutzen.

Anstelle der Schraubverbindung durch Schraubgewinde 14, 15 zwischen den beiden Teilen 16, 17 können auch andere bekannte Verbindungsmittel treten, beispielsweise Schnappverbindungen, Bajonettverbindungen oder Rastverbindungen. Auch diese Verbindungsmittel können schon beim Herstellungsprozess einstückig angeformt werden, bevor die Kunststoffflasche in zwei Teile aufgetrennt wird.

Beim Ausführungsbeispiel ist die Trennstelle nahe des Bodens 11 vorgesehen. Sie kann selbstverständlich auch an anderen Stellen des Flaschenkörpers 10 vorgesehen werden.

Alternativ zur einstückigen Herstellung des Flaschenkörpers und anschließenden Auftrennung in zwei Teile 16, 17 können diese Teile 16, 17 prinzipiell auch separat hergestellt werden.

## Patentansprüche

1. Kunststoffflasche, insbesondere Getränkeflasche, mit einem Flaschenkörper (10), der an einem Ende einen Boden (11) und am anderen Ende eine verschließbare Ausgießöffnung (13) besitzt, **dadurch gekennzeichnet, dass** der Flaschenkörper (10) aus zwei separaten Teilen (16, 17) besteht, die mit lösbaren Verbindungsmitteln (14, 15) zur dichtenden Verbindung miteinander versehen sind, wobei wenigstens eines der Teile (16, 17) einen sich zur Verbindungsstelle hin vergrößernden Durchmesser besitzt.

2. Kunststoffflasche nach Anspruch 1, **dadurch gekennzeichnet, dass** die Verbindungsmittel (14, 15) einstückig an den beiden Teilen (16, 17) des Flaschenkörpers (10) angeformt sind.

3. Kunststoffflasche, insbesondere Getränkeflasche, mit einem Flaschenkörper (10), der an einem Ende einen Boden (11) und am anderen Ende eine verschließbare Ausgießöffnung (13) besitzt, **dadurch gekennzeichnet, dass** der einstückige Flaschenkörper (10) zwei axial benachbarte, an seinem Umfang angeordnete Verbindungsmittel (14, 15) besitzt, die nach dem Auftrennen des Flaschenkörpers (10) entlang einer zwischen den Verbindungsmitteln (14, 15) verlaufenden Trennlinie (T) in zwei Teile(16, 17) dichtend miteinander verbindbar sind.

4. Kunststoffflasche nach Anspruch 3, **dadurch gekennzeichnet, dass** sich der Durchmesser des Flaschenkörpers (10) ausgehend von den Verbindungsmitteln (14, 15) zum Boden (11) und/oder zur Ausgießöffnung (13) hin verringert.

5. Kunststoffflasche nach einem der vorhergehenden Ansprüche, **dadurch gekennzeichnet, dass** die Verbindungsmittel (14, 15) als Schnapp-, Schraub-, Bajonett- oder Rastverbindungsmittel ausgebildet sind.

6. Kunststoffflasche nach Anspruch 5, **dadurch gekennzeichnet, dass** die beiden Teile (16, 17) des Flaschenkörpers (10) ineinander verschraubbare Gewinde als Verbindungsmittel (14, 15) besitzen.

7. Kunststoffflasche nach Anspruch 5 oder 6, **dadurch gekennzeichnet, dass** der Flaschenkörper (10) eine ein rutschfestes Greifen gestattende Außenstruktur besitzt, insbesondere eine Riffelung.

8. Kunststoffflasche nach einem der vorhergehenden Ansprüche, **dadurch gekennzeichnet, dass** der axiale Abstand zwischen den Verbindungsmitteln (14, 15) und dem Boden (11) wesentlich geringer ist als der axiale Abstand zwischen den Verbindungsmitteln (14, 15) und der Ausgießöffnung (13).

9. Kunststoffflasche nach einem der vorhergehenden Ansprüche, **dadurch gekennzeichnet, dass** wenigstens eines der beiden Teile (16, 17) des Flaschenkörpers (10) mit entsprechenden gleichen Teilen ineinanderstapelbar ausgebildet ist.

10. Kunststoffflasche nach einem der vorhergehenden Ansprüche, **dadurch gekennzeichnet, dass** der Flaschenkörper (10) ein nach dem Streckblasverfahren oder Extrusionsblasverfahren hergestellter Körper ist.
